Europäisches Patentamt

European Patent Office

Office européen des brevets

(11) Publication number: **0 044 750**
**B1**

(12) **EUROPEAN PATENT SPECIFICATION**

(45) Date of publication of patent specification: **09.04.86**

(51) Int. Cl.⁴: **B 41 M 5/26**, G 01 K 11/12

(21) Application number: **81303372.7**

(22) Date of filing: **23.07.81**

(54) **Method of marking a dimensionally heat recoverable article.**

(30) Priority: **23.07.80 US 171278**

(43) Date of publication of application:
**27.01.82 Bulletin 82/04**

(45) Publication of the grant of the patent:
**09.04.86 Bulletin 86/15**

(84) Designated Contracting States:
**AT BE CH DE FR IT LI NL SE**

(56) References cited:
**FR-A-2 094 367**
**FR-A-2 267 358**
**FR-A-2 299 972**
**US-A-4 050 945**
**US-A-4 121 011**

(73) Proprietor: **RAYCHEM CORPORATION**
**300 Constitution Drive**
**Menlo Park California 94025 (US)**

(72) Inventor: **Carlomagno, William D.**
**1079 Eden Bower Lane**
**Redwood City California 94061 (US)**

(74) Representative: **Dlugosz, Anthony Charles et al**
**Raychem Limited Intellectual Property Law**
**Department Faraday Road**
**Dorcan Swindon Wiltshire (GB)**

Courier Press, Leamington Spa, England.

EP 0 044 750 B1

## Description

The present invention is directed to methods for marking objects.

With the advent of highly sophisticated and correspondingly complex electrical and electronic systems, a need has arisen for the detailed labeling of the individual wires and cables present in such systems to aid in the assembly, repair and/or subsequent alteration of the electrical or electronic device. As a result of this need, flexible, heat recoverable, polymeric marker sleeves have been developed which are either colour coded or include printed indicia for identification of a specific wire. These sleeves are then positioned over the conductor and held by a variety of methods. The sleeves are then heated to recover them onto the conductor so that the conductor is permanently marked.

A variety of methods are available for printing indicia on these sleeves. One such method is transfer ribbon marking where transfer ribbons deposit ink on the surface of the sleeve such as with a typewriter. The ink must be cured or "permatized" on the sleeve to effect a permanent mark. Curing can be effected using infrared to obtain temperatures in the order of 300 to 500°C for about one second.

A disadvantage of transfer ribbon marking is that during the heating step, the heat-recoverable sleeves can recover to their heat-stable position. To prevent this from occurring, the unmarked sleeves are loaded onto fingers or holders extending from a continuous carrier belt such as described in U.S. Patent Nos. 3,894,731 and 4,032,010. However, the carrier belt, and the steps of loading and unloading the sleeves from the belt significantly increase the cost of marking.

Another marking method utilizes hot-stamp foils where heat and pressure are used to transfer ink from the foil onto the sleeve. This method is very time consuming and the hot-stamp foils have a limited shelf life if not properly stored. Furthermore, it is difficult to obtain a high-quality permanent mark with hot-stamp foils because the quality of the mark is very sensitive to heat, pressure and time during the marking operation.

Yet another method of marking recoverable polymeric sleeves utilizes a specially formulated ink provided as an ink jet onto the surface of the sleeve. However, the ink used has a limited shelf life and the inking system is expensive. Furthermore, the marks produced with these inks have only limited solvent and abrasion resistance.

The use of thermochromic materials with dimensionally heat-recoverable articles has been proposed in US—A—4,121,011 to Glover et al, for indicating when sufficient heat has been applied to the article during recovery.

The present invention provides a method of marking a dimensionally heat-recoverable article which, in use, is heated to an elevated temperature that is at least as high as the recovery temperature of the article, at least a portion of the article comprising a thermochromic material that undergoes a visible colour change when heated to a transition temperature, which method further comprises forming at least one indicium on the article by heating only selected portions of said surface portion of the article that correspond to the indicium to at least the transition temperature of the material, wherein the transition temperature of the thermochromic material is at least 30°C above the said elevated temperature so that the colour of the thermochromic material remains unchanged when the article is heated in use, and the thermochromic material undergoes the visible colour change when heated to the transition temperature for a period of not more than 5 seconds so that the article does not prematurely recover when the selected portions thereof are heated to form the indicium.

For simple heat-recoverable articles, the maximum elevated temperature to which the article as a whole or at least the said portion as a whole is heated in use (hereinafter called the utilization temperature) is usually a temperature slightly above the heat-recovery temperature. For an article carrying a fusible material such as the sleeves described in U.S. Patent No. 3,396,460, the elevated utilization temperature usually is slightly above the fusion temperature of the fusible material. In such a case the fusible material can, for example, be solder or a meltable thermoplastic material. For an article carrying a heat-activatable material for example a heat-activatable adhesive, the elevated utilization temperature usually is slightly above the activation temperature. For these applications, generally the utilization temperature is at least 100°C although, in some cases, the utilization may be as low as 60°C. Often, such articles are available in the form of a heat-shrinkable tube containing a fusible insert or a heat-activatable adhesive. In use such articles or at least the portion thereof comprising the thermochromic material may be heated to a temperature substantially higher than the heat-recovery temperature to ensure that the insert melts or the adhesive is activated.

In use, visible indicia are formed on the article by heating only selected portions of the surface of the article that correspond to the indicia. The selected portions are heated to at least the transition temperature until those portions change colour, preferably for less than 5 seconds. Preferably the colour change is substantially irreversible so that indicia formed on the article are permanent.

The thermochromic composition can be carried on the surface of the article, or can be dispersed within the article. Preferably the thermochromic composition is dispersed in the article to ensure that markings cannot be removed by abrasion or solvents.

As stated above the articles used in the method according to the invention are dimensionally heat-recoverable. A heat-recoverable article is an article the dimensional configuration of which may be made substantially to change when subjected to heat treatment.

2

Usually these articles recover, on heating, towards an original shape from which they have previously been deformed, but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962; 3,086,242 and 3,957,372. As is made clear in, for example, U.S. Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In the production of heat recoverable articles, the polymeric material may be cross-linked at any stage in the production of the article that will enhance the desired dimensionally recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in British Patent 1,440,524, an elastomeric member such as an outer tubular member is held in a stretched state by a second member, such as in inner tubular member, which, upon heating weakens and thus allows the elastomeric member to recover.

Examples of polymers used in the manufacture of heat-recoverable articles include polyolefins, e.g. polyethylene; copolymers of ethylene with ethylenically unsaturated monomers, e.g., ethylene/ethyl acrylate, ethylene/vinyl acetate copolymers; polyvinyl chloride; elastomers; silicones; polytetrafluoroethylene; polyvinylidene fluorides; polyurethanes; and ionomers; crosslinked where necessary or desired, either by radiation or chemical means. Those materials which can be rendered heat-recoverable below their softening point, for example polyvinyl chloride need not, but can, be crosslinked, where for example, it is desired to reduce the risk of damage to the article by overheating.

The heat-recovery temperature of these polymers is generally a temperature slightly above the crystalline melting temperature of the polymer. For example, the heat-recovery temperature of low density polyethylene is about 110°C; high density polyethylene about 135°C; polyvinylidene fluoride about 175°C; ethylene vinyl acetate copolymers about 80—90°C; and ethylene acrylate copolymers about 80—90°C. Some polymers, such as polyvinyl chloride which are not crystalline, recover at about their glass transition temperature. The recovery temperature of polyvinyl chloride is about 80°C.

Heat-recoverable articles made from these polymers can recover in about two to three minutes when heated with a commercial heat gun.

The wall thickness of the article affects its performance in use. Preferable the wall thickness is at least about 0.127 millimetres (0.005 inch) to avoid deformation of the wall during marking with indicia. Preferably the wall thickness is less than about 1.27 millimetres (0.05 inches) because such a thick wall requires excessively long times to mark. Most preferably the wall thickness is from about 0.2 mm (0.008 inch) to about 0.254 mm (0.01 inch).

The present invention is not limited to use only with heat-recoverable polymeric articles. It is applicable to other heat-recoverable substrates and applications, including, for example, heat-recoverable articles made from memory metals as described in British Patents Nos. 1,327,441 and 1,488,393, especially preconditioned alloys described in U.S. Pat. Nos. 4,436,669; 4,067,752 and 4,095,999. For such articles, the thermochromic composition is provided as a coating.

The heat-recoverable article can either shrink or expand when heated to its heat-recovery temperature.

In forming polymeric heat-recoverable articles with the thermochromic composition dispersed therein, a polymeric composition comprising the thermochromic composition is heat processed such as with an extruder. When using a thermochromic composition that yields a substantially irreversible colour change, it is important that the colour change does not occur during heat processing. To avoid such a colour change, preferably the transition temperature is at least about 15°C, and more preferably at least about 20°C higher than the heat processing temperature applied during manufacture of the article.

Heat processing by extrusion typically occurs at the following temperatures for polymers useful for forming heat recoverable articles:

| | |
|---|---|
| low density polyethylene | 100—250°C |
| high density polyethylene | 170—290°C |
| polyvinylidene fluoride | 230°C |
| ethylene vinyl acrylate copolymers | 95°C |
| polyvinyl chloride | 135°C |

3

| polytetrafluoroethylene | 345°C |
|---|---|
| polyurethane | 125—235°C |
| ionomers | 140—290°C |

A variety of thermochromic compounds, i.e. compounds which change colour at a transition temperature, are known. Examples of such compounds are given in an article by Jesse H. Day entitled "Thermochromism of Inorganic Compounds" in *Chemical Reviews 68*, 649 (1968); U.S. Patent No. 3,816,335 to Evans; U.S. Patent No. 3,236,651 to Marks; U.S. Patent No. 3,980,581 to Godsey; U.S. Patent Nos. 4,105,583 and 4,121,011 to Glover; and an article by Cowling et al entitled "Temperature-Indicating Paint" in Industrial and Engineering Chemistry, *45*, 2317 (1953).

The temperature of the colour change or "transition temperature" of thermochromic compositions depends on the environment and the rate of heating. It is a matter of routine experiment to ascertain the transition temperature of a particular thermochromic composition.

For heat-recoverable articles, the transition temperature range of interest is from about 110 to about 500°C, and preferably from about 230 to about 450°C. Preferably the colour change is highly visible, such as a change from white to black, yellow to black, and the like.

Examples of thermochromic compositions that can be used in heat-recoverable articles are cadmium hydroxide; ammonium vanadate and mannitol; and bismuth subcarbonate and thiodipropionic acid.

The thermochromic composition should change its colour in a short time so that commercially acceptable rates of marking on the article can be achieved, and so that the article does not heat-recover when localized portions of the article are heated for printing. Thus, the thermochromic composition changes colour when heated to a selected transition temperature for up to 5 seconds, preferably in less than one second, and more preferably less than about 0.5 seconds. A further advantage of short printing times is that printing times substantially in excess of about 1 second can yield fuzzy indicia.

To avoid heat-recovery of the article during printing, preferably the thermochromic composition used has a transition temperature no more than about 150°C greater than the utilization temperature of the article. To avoid changing the colour of the thermochromic composition during use of the article, the transition temperature is at least 30°C, and preferably at least about 70°C greater than the utilization temperature.

When the article used in the present invention comprises a polymeric body, best results visually are achieved when the thermochromic composition is dispersed homogeneously in the polymer by, for example, the use of a solvent common to the polymer and the composition, or by blending the composition into the polymer on a mill. Thermochromic articles can be made if the composition is only partially dispersed. Any means of incorporating the thermochromic composition into the polymer, including mixing the two materials in liquid or powder form, can be employed.

After incorporating an appropriate thermochromic composition into a polymer, the polymer can be shaped and rendered heat-recoverable by normal methods. For example, polyethylene into which has been blended a thermochromic composition can be extruded into a tube, crosslinked by radiation, and expanded to form a heat-shrinkable tube which on heating to cause recovery returns to its original size.

The thermochromic composition can be a part of a coating composition applied to at least part of the surface of an article. Such a coating composition can comprise a thermochromic composition, a polymeric binder such as an acrylic resin, and an organic solvent such as a halogenated solvent. Examples of suitable binders include copolymers of N-butyl-methacrylate with methylmethacrylate; ethylene/vinyl acetate copolymers; ethylene/alkylacrylate copolymers; chlorinated polyethylenes; vinyl chloride homo- and copolymers, especially vinyl acetate/vinyl chloride copolymers which can be wholly or partially hydrolyzed; and polyvinyl acetate, which can also be partially hydrolyzed. Other materials are suited for different applications such as for example, water-base latex paints.

The solvent used in the coating composition can be a chlorinated solvent such as 1,1,1-trichloroethylene.

Alternatively, the article can comprise two layers coextruded into a laminate, one or both of the layers containing the thermochromic composition. In another version of the present invention, bonded film can be used such as two pieces of film, each about 0.127 mm thick, bonded together with heat, with a thermochromic composition in one or both of the films.

The proportion of thermochromic composition in the article is determined by the intensity of colour change effect desired, the inherent intensity of the colours exhibited by the thermochromic composition in its different states, and the translucency and thickness of the polymer. Preferably as little thermochromic composition as possible is used because the thermochromic materials tend to be more expensive than polymers and can adversely affect the physical properties and performance of the article. For an article formed from a polymeric composition with a thermochromic composition dispersed therein, it generally is sufficient to include thermochromic composition in an amount up to about 10% by weight of the polymeric composition.

In the version of the present invention where the thermochromic composition is applied as a coating to the article, the level of the thermochromic composition in the coating can vary widely, but again preferably it is minimized because of the cost involved.

Other ingredients can be added to the polymeric material used for forming an article according to the present invention. For example, a pigment such as an organic dye, e.g. Sunfast blue or Sumatra yellow, can be added for coloring purposes. Thickening agents such as fumed silica (e.g. Cabo-O-Sil and Aerosol) can be added to improve the rheological properties. The polymeric composition can contain other materials, e.g. flame retardant and anti-oxidants.

Articles have been formed from polymeric compositions using low-density polyethylene, high density polyethylene, polyvinylidene fluoride, EVA (ethylene vinyl acetate copolymer), and EEA (ethylene/ethyl acrylate copolymer). Conventional polymer compositions can be used simply by adding the requisite amount of thermochromic composition. The polymeric compositions used contained from about 50 to 70 percent polymer, 20 to 35 percent flame retardant, 1 to 3 percent colouring pigment, 2 to 5 percent antioxidant, and 1 to 3 percent prorad in addition to the thermochromic composition (all percentages are by weight unless indicated otherwise). The thermochromic compositions used included cadmium hydroxide in an amount of from about 2 to to about 6 percent by weight; ammonium vanadate at about 5 percent by weight with mannitol as an activator in an amount of from about 1 to about 3 percent by weight; and bismuth sub-carbonate in an amount of from about 0.8 to about 3.2 percent by weight with thiodipropionic acid in amount from about 1.2 to about 4.8 percent by weight.

Articles used in the present invention of particular importance are those that are adapted to be positioned on an object and be secured thereto by heating so that the article may be used to provide the object with indicia. The method according to the present invention provides substantial advantages for marking substrates. A highly visible, abrasion-resistant, solvent-resistant mark can be produced. This can be done economically in a simple printing step, without the need for any permatizing operation. The present invention provides the first economical and efficient permanent marking system for heat-recoverable articles that eliminates the need for a restraint system to prevent premature recovery of the article during the printing operation. In addition the cumbersome and expensive support system required for transfer ribbon marking is eliminated.

In order to mark the object, visible indicia are formed on the surface of the article by heating only selected portions of the surface corresponding to the indicia to at least the transition temperature of the thermochromic material, until the portions change colour, preferably for less than about 5 seconds. The article is recovered on the substrate by heating the article to its heat-recovery temperature. For ease in marking the substrate, preferably the indicia are formed on the article prior to the step of recovering the article. However, the steps of forming the indicia and recovering the article can be performed simultaneously, or the article can be recovered before the indicia are formed.

The indicia can be formed with a thermal printer, solder iron, laser, or other suitable device. A suitable thermal printer is available from Matsushita, Division of Panasonic of Japan, Part No. EUY-10T, which is a five-by-seven dot matrix scanning head. A eight-bit ASCII keyboard can be used for controlling the indicia to be placed on the articles. A logic interface is needed between the keyboard and the thermal printer. A suitable logic interface is Model No. EUD-PUD available from Matsushita.

Another suitable printer is a thick film resistance print head available from Gulton Industries, Inc. of Metuchen, New Jersey under model No. C1137-24F24. It can be powered by a DC current pulse generator providing 30 volts, 9 amperes, at a pulse width of from 200 milliseconds to 1 second.

The method according to the present invention can be used in a wide variety of applications, including marking articles of circular and non-circular cross-section. For example, it can be used for marking syringes, intravenous fluid bottles, electrical wires, tubes, as identification bracelets in hospitals, marking plumbing lines, process piping, and other substrates.

The following Examples illustrate the invention.

Examples 1 and 2
The following compositions were successfully used:

|  | % By weight | |
| --- | --- | --- |
|  | Example 1 | Example 2 |
| Low density polyethylene | 45.1 | — |
| Ethylene vinyl acetate | — | 46.6 |
| Ethylene propylene rubber | 7.9 | — |
| Silicone | 2 | 1.4 |
| Flame retardants | 31.4 | 36.1 |
| Titanium dioxide | 1.4 | 1.4 |
| Antioxidants and stabilizers | 4.8 | 5.7 |
| Prorad | 2.4 | 3.8 |
| Thiodipropionic acid | 3 | 3 |
| Bismuth subcarbonate | 2 | 2 |

As noted from these examples, the thermochromic composition can comprise one or more compounds, depending upon the nature of the colour change at the transition temperature.

Table 1 shows thermochromic compositions suitable for use in the present invention, including their transition temperature and the colour change that occurs at the transition temperature.

TABLE 1

| Compound | Transition temperature | Colour changes |
| --- | --- | --- |
| $NH_4VO_3$ <br> Ammonium vanadate | 140—150°C | White to brown |
| $CoNH_4PO_4 \cdot H_2O$ <br> Cobalt ammonium phosphate <br> (Shepard violet 102) | 165—175°C | Violet to blue |
| $Cd(OH)_2$ <br> Cadmium hydroxide | 200—210°C | White to black |
| $Bi_2O_2CO_3$ and $S(CH_2CH_2COOH)_2$ <br> Bismuth subcarbonate and <br> 3,3-thiodipropionic acid | 245—255°C | White to black |
| $CuCO_3 \cdot Cu(OH)_2$ <br> Copper carbonate | 275—280°C | Green to black |
| $Fe_2O_3 \cdot H_2O$ <br> Iron oxide | 300—305°C | Yellow to black |

## Claims

1. A method of marking a dimensionally heat-recoverable article which, in use, is heated to an elevated temperature that is at least as high as the recovery temperature of the article, at least a portion of the article comprising a thermochromic material that undergoes a visible colour change when heated to a transition temperature, which method further comprises forming at least one indicium on the article by heating only selected portions of said surface portion of the article that correspond to the indicium to at least the transition temperature of the material, wherein the transition temperature of the thermochromic material is at least 30°C above the said elevated temperature so that the colour of the thermochromic material remains unchanged when the article is heated in use, and the thermochromic material undergoes the visible colour change when heated to the transition temperature for a period of not more than 5 seconds so that the article does not prematurely recover when the selected portions thereof are heated to form the indicium.

2. A method as claimed in claim 1, wherein the colour change of the thermochromic material is substantially irreversible.

3. A method as claimed in claim 1 or claim 2, wherein the said elevated temperature to which the article is heated is at least 100°C.

4. A method as claimed in any one of claims 1 to 3, wherein the transition temperature of the thermochromic material is at least 70°C above the said elevated temperature.

5. A method as claimed in any one of claims 1 to 4, wherein the thermochromic material undergoes the visible colour change when heated to the transition temperature for a period of less than 1 second, and preferably less than 0.5 seconds.

6. A method as claimed in any one of claims 1 to 5, wherein the transition temperature is not higher than 150°C above the said elevated temperature to which the article is heated.

7. A method as claimed in any one of claims 1 to 6, at least part of which is formed from a polymeric material, the thermochromic material being present as a dispersion in the polymeric material.

8. A method as claimed in any of claims 1 to 7, wherein the thermochromic material comprises cadmium hydroxide, ammonium vanadate, bismuth subcarbonate and thiodipropionic acid, cobalt ammonium phosphate, copper carbonate or ferric oxide monohydrate.

9. A method as claimed in any one of claims 1 to 8, wherein the or each indicium is formed by means of a thermal printer.

10. A method of marking an object, which comprises forming at least one indicium on a dimensionally heat recoverable article by a method as claimed in any one of claims 1 to 9, placing the article on the object, and heating the article to the recovery temperature thereof to secure it to the object.

## Patentansprüche

1. Ein Verfahren zur Markierung eines in der Wärme in den Abmessungen rückstellbaren Gegenstands, der bei der Verwendung auf eine erhöhte Temperatur erwärmt wird, die mindestens so hoch ist, wie die Rückstelltemperatur des Gegenstands, wobei mindestens ein Teil des Gegenstandes ein thermochromes Material umfasst, das eine sichtbare Farbänderung beim Erwärmen auf eine Übergangstemperatur eingeht, wobei das Verfahren ausserdem die Bildung von mindestens einem Indiz auf dem Gegenstand, durch Erwärmen von nur ausgewählten Teilen des Oberflächenanteils des Gegenstandes, die dem Indiz entsprechen, auf mindestens die Übergangstemperatur des Materials, umfasst, wobei die Übergangstemperatur des thermochromen Materials mindestens 30°C über der erhöhten Temperatur liegt, so dass die Farbe des thermochromen Materials unverändert bleibt, wenn der Gegenstand bei der Verwendung erwärmt wird, und das thermochrome Material eine sichtbare Farbänderung eingeht, wenn es auf die Übergangstemperatur während eines Zeitraums von nicht mehr als 5 sek erwärmt wird, so dass der Gegenstand nicht vorzeitig rückgestellt wird, wenn die ausgewählten Anteile davon zur Bildung des Indiz erwärmt werden.

2. Ein Verfahren, wie in Anspruch 1 beansprucht, bei dem die Farbänderung des thermochromen Materials im wesentlichen irreversibel ist.

3. Ein Verfahren, wie in Anspruch 1 oder Anspruch 2 beansprucht, bei dem die erhöhte Temperatur, auf die der Gegenstand erwärmt wird, mindestens 100°C ist.

4. Ein Verfahren, wie in einem der Ansprüche 1 bis 3 beansprucht, bei dem die Übergangstemperatur des thermochromen Materials mindestens 70°C über der erhöhten Temperatur ist.

5. Ein Verfahren, wie in einem der Ansprüche 1 bis 4 beansprucht, bei dem das thermochrome Material die sichtbare Farbänderung eingeht, wenn es auf die Übergangstemperatur während eines Zeitraums von weniger als 1 sek und vorzugsweise weniger als 0,5 sek erwärmt wird.

6. Ein Verfahren, wie in einem der Ansprüche 1 bis 5 beansprucht, bei dem die Übergangstemperatur nicht höher als 150°C über der erhöhten Temperatur ist, auf die der Gegenstand erwärmt wird.

7. Ein Verfahren, wie in einem der Ansprüche 1 bis 6 beansprucht, bei dem mindestens ein Teil davon aus einem polymeren Material gebildet wird, wobei das thermochrome Material also eine Dispersion in dem polymeren Material vorhanden ist.

8. Ein Verfahren, wie in einem der Ansprüche 1 bis 7 beansprucht, bei dem das thermochrome Material Cadmiumhydroxid, Ammoniumvanadat, Wismuthsubcarbonat und Thiodipropionsäure, Kobaltammoniumphosphat, Kupfercarbonat oder Eisen-III-oxid-monohydrat umfasst.

9. Ein Verfahren, wie in einem der Ansprüche 1 bis 8 beansprucht, bei dem das oder jedes Indiz durch einen thermischen Drucker ausgebildet wird.

10. Ein Verfahren zur Markierung eines Objekts, das die Bildung von mindestens einem Indiz auf einem in der Wärme in den Abmessungen rückstellbaren Gegenstand, nach einem Verfahren, wie in einem der Ansprüche 1 bis 9 beansprucht, umfasst, wobei der Gegenstand auf das Objekt aufgebracht wird und der Gegenstand auf die Rückstelltemperatur davon erwärmt wird, um ihn an dem Objekt zu befestigen.

**Revendications**

1. Procédé de marquage d'un article à reprise de forme dimensionnelle qui, en utilisation, est chauffé à une température élevée qui est au moins aussi élevée que la température de reprise de forme de l'article, au moins une partie de l'article comprenant une matière thermochromique qui subit un changement de couleur visible lorsqu'il est chauffé à une température de transition, lequel procédé consiste en outre à former au moins un signe sur l'article en chauffant seulement certaines parties choisies de ladite partie de surface de l'article, qui correspond à l'indice, au moins à la température de transition de la matière, dans lequel la température de transition de la matière thermochromique est supérieure d'au moins 30°C à ladite température élevée, de sorte que la couleur de la matière thermochromique reste inchangée lorsque l'article est chauffé en utilisation, et la matière thermochromique subit le changement de couleur visible lorsqu'elle est chauffée à la température de transition pendant une période de pas plus de 5 secondes, de sorte que l'article ne fait pas prématurément sa reprise de forme lorsque des parties choisies de cet article sont chauffées pour former le signe.

2. Procédé selon la revendication 1, dans lequel le changement de couleur de la matière thermochromique est pratiquement irréversible.

3. Procédé selon la revendication 1 ou la revendication 2, dans lequel ladite température élevée à laquelle l'article est chauffé est d'au moins 100°C.

4. Procédé selon l'une quelconque des revendications 1 à 3, dans lequel la température de transition de la matière thermochromique est supérieure d'au moins 70°C à ladite température élevée.

5. Procédé selon l'une quelconque des revendications 1 à 4, dans lequel la matière thermochromique subit le changement de couleur visible lorsqu'elle est chauffée à la température de transition pendant une période de moins de 1 seconde et, de préférence pendant moins de 0,5 seconde.

6. Procédé selon l'une quelconque des revendications 1 à 5, dans lequel la température de transition n'est pas supérieure de plus de 150°C à ladite température élevée à laquelle l'article est chauffé.

7. Procédé selon l'une quelconque des revendications 1 à 6, dans lequel au moins une partie de l'article est formée d'une matière polymère, la matière thermochromique étant présente sous la forme d'une dispersion dans la matière polymère.

8. Procédé selon l'une quelconque des revendications 1 à 7, dans lequel la matière thermochromique comprend de l'hydroxide de cadmium, du vanadate d'ammonium, du sous carbonate de bismuth et de l'acide de thiodipropionique, du phosphate de cobalt et d'ammonium, du carbonate de cuivre ou du monohydrate d'oxyde ferrique.

9. Procédé selon l'une quelconque des revendications 1 à 8, dans lequel le ou chaque signe est formé au moyen d'une imprimante thermique.

10. Procédé de marquage d'un objet qui consiste à former au moins un signe sur un article à reprise de forme thermique dimensionnelle par un procédé selon l'une quelconque des revendications 1 à 9, à placer l'article sur l'objet et à chauffer l'article à la température de reprise de forme pour le fixer à l'objet.